# EUROPEAN PATENT SPECIFICATION

(11) **EP 0 380 883 B1**
(45) Date of publication and mention of the grant of the patent: **09.06.1993**
(21) Application number: 89313502.0
(22) Date of filing: 22.12.1989
(51) Int. Cl.: F02B 61/04, F02M 35/10

(54) **An outboard engine**
Aussenbordmotor
Moteur hors-bord

(30) Priority: 26.12.1988 JP 168028/88 U; 04.11.1989 JP 129185/89 U
(43) Date of publication of application: 08.08.1990
(73) Proprietor: AICHI KIKAI KOGYO KABUSHIKI KAISHA, Nagoya (JP)
(72) Inventor: Taka, Kiichiro Aichi Kikai Kogyo Kabushiki Kaisha, Nagoya (JP); Sano, Haruo Aichi Kikai Kogyo Kabushiki Kaisha, Nagoya (JP)
(74) Representative: Senior, Alan Murray

(56) References cited:
- EP-A- 0 271 136
- DE-A- 2 156 704
- GB-A- 2 150 220
- US-A- 4 648 351
- US-A- 4 760 704
- PATENT ABSTRACTS OF JAPAN vol. 10, no. 246 (M-510)(2302) 23 August 1986, & JP-A-61 76730 (TOYOTA MOTOR CORPORATION) 19 April 1986
- "Bateaux" No 330, Nov 1985, Page 108: Moteurs Yamaha

## Description

This invention relates to an outboard engine.

A two-stroke outboard engine has heretofore mainly been used on boats for leisure-time amusement and fishing because a two-stroke engine is small and lightweight and yet capable of developing great power.

However, the engine also has the problem of causing water pollution because of the mixed fuel it uses. It also gives an unpleasant feeling to people because it exhausts a lot of hydrocarbon (hereinafter referred to as HC). Furthermore the engine is sometimes difficult to start as the plug is susceptible to damage.

US-A-4684351 discloses a four-stroke outboard motor in which the exhaust gas is cooled in order to reduce the back pressure in an extension case of the exhaust, thereby improving the power output.

Furthermore, Bateaux No. 330 (November 1985) describes a Yamaha F 9,9 A twin cylinder four-stroke outboard motor as having a "dual thrust" exhaust which permits the exhaust gas to be smoothly exhausted.

It is known to supercharge automobile engines by means of engine-driven blowers or by blowers driven by an exhaust gas turbine (a turbo charger), but no true super-charging has been applied to the outboard motor where in the past the exhaust tuning or cooling has been adopted.

An object of the present invention is to provide an improved outboard engine. This is achieved by an engine having all features of claim 1

The invention, in a preferred embodiment can provide an outboard engine which has good mixture-distributing conditions for each cylinder, and which can cool the air or mixture in the intake manifold, connecting the supercharging blower with each port of the cylinder head, and which can prevent the engine burning out by cooling the lubricating oil in the oil pan, and can have a lubricating oil-supplying hole through which the oil can be supplied on board and the inspection of the condition of the oil can be precisely done on board, and can have a thrust washer with somewhat free-setting location on the crankshaft and with rotary stopper means which need not a lot of machining processes.

An outboard engine of this invention comprises a four-stroke engine equipped with a supercharging blower which is attached between the intake manifold and the carburettor. Therefore this engine causes little water pollution, which is one of the defects of a two-stroke engine, and it operates in a condition with very little discharged hydrocarbons or a foul odour. Also it is easy to start and develops the same amount of power as a two-stroke engine. Furthermore, as the supercharging blower is located under the carburettor, mixture is supplied evenly into each cylinder of the engine, producing a good power-developing condition. Then a secondary effect of the good adaptability of the engine to the acceleration operation, is that the supercharging blower is attached in close proximity to the engine.

The invention will be more clearly understood from the following description, which is given by way of example only with reference to the accompanying drawings, in which:
Fig. 1 is a view for showing the general construction of an outboard engine according to this invention.
Fig. 2 is a view showing the location of each part of the engine.
Fig. 3 is a cut-away side view of the outboard engine.
Fig. 4 is a cross-sectional view on the line A-A of Fig. 3.
Fig. 5 is a cut-away side view showing a part of a second embodiment of outboard engine.
Fig. 6 is a cut-away side view showing a part of a third embodiment of outboard engine.
Fig. 7 is a side view of the thrust washer of an outboard engine according to the invention.
Fig. 8 is a cross-sectional view on line B-B of Fig. 7.
Fig. 9 is a cut-away side view for showing a part of a conventional engine body.

### DETAILED DESCRIPTION OF THE PREFERRED EMBODIMENT

This invention will now be explained in detail.

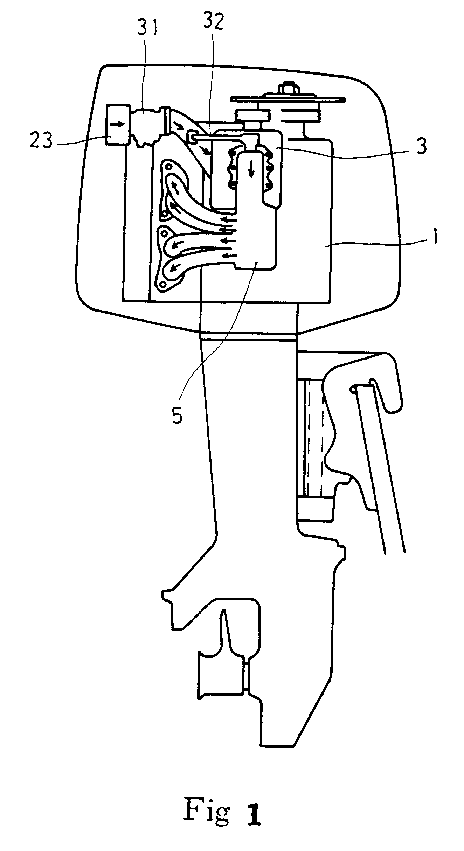

Fig. 1 is a view showing the general construction of a first embodiment of an outboard engine in accordance with the invention.

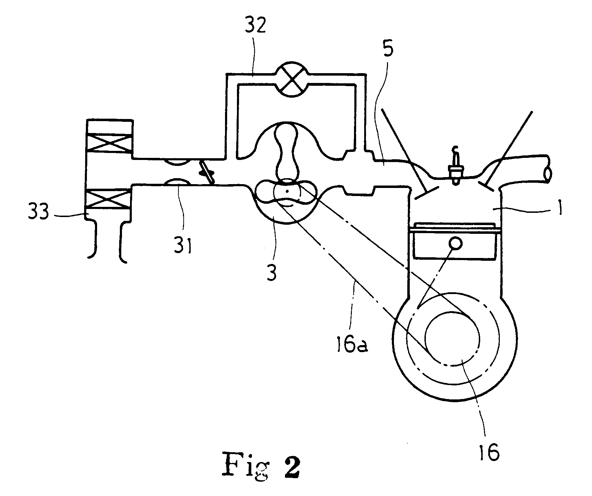

Fig. 2 is a view showing even more generally the construction of an engine. In this Figure, the outboard engine 1 is equipped with an attached supercharging blower 3. This supercharging blower is connected to the crankshaft 16 of the engine 1, by which it is rotatably driven by the engine. In this embodiment, the supercharging blower 3 is located between the intake manifold 5 and carburettor 31 of the engine. The bypass 32 is also located between the carburettor 31 and the intake manifold 5, and 33 in the Figure is an air cleaner.

In this way, the outboard engine is not only easy to start with steady idling, as the ignition plug is not susceptible to damage with a four-stroke engine applied, but also it is driven in good and comfortable condition without causing water pollution or a foul odour with very little discharged hydrocarbons.

Furthermore, the engine maintains a large amount of efficiency of air into the engine by using the supercharging blower 3, being capable of developing high power with the relatively small and light body. As the supercharging blower 3 is located downstream of the carburettor 31, the air that is drawn into the carburettor through the air cleaner is mixed with fuel and then introduced into the supercharging blower 3, whereby the mixture is fully agitated and introduced into the intake manifold, thus keeping the mixture ratio in each cylinder in a good condition and developing great power. In the case of the conventional vertical type engine with several cylinders, the mixing rate of gas in each cylinder has been different, sometimes causing unsteady rotation of the engine. In the case of a normally aspirated four-cylinder engine, the difference of the mixture ratio rate in each cylinder is 3 to 4 %, but in this embodiment with four cylinders, the difference is 0.2 to 0.4 % because the mixture is introduced into the engine after it has been mixed in the supercharging blower.

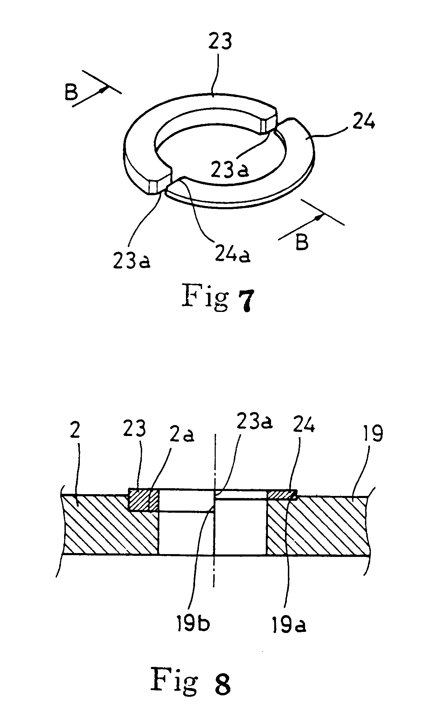

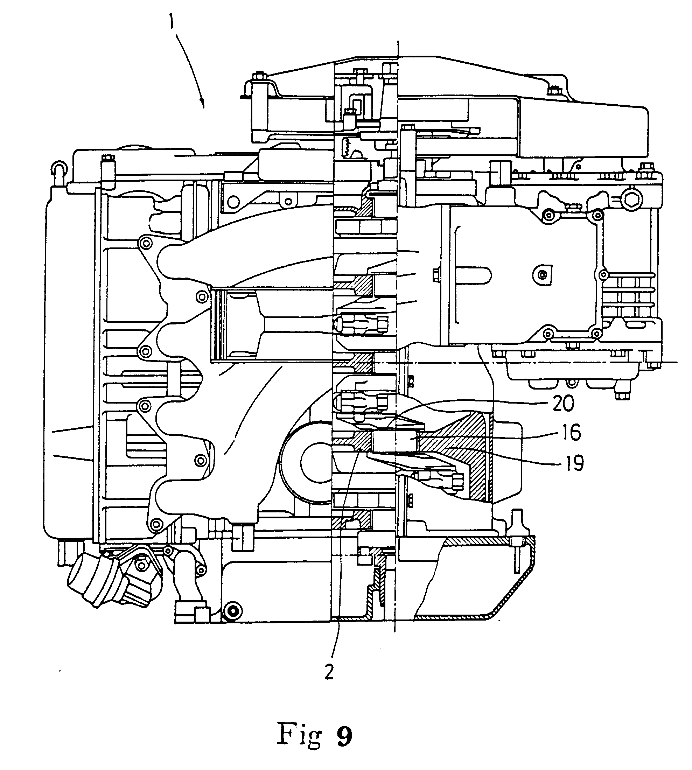

Fig. 7 is a side view of thrust washer parts 23 and 24 of the outboard engine. In a conventional outboard engine, the thrust washer parts, to bear the load of the crankshaft 16, have been attached to in the cylinder block 2 of the crankshaft bearing and the bearing cap as shown in Fig. 9.

The thrust washer in this engine is composed of the semicircular separate bits 23 and 24, which are different from each other in thickness as shown in the cross-sectional view in Fig. 8. To hold these bits 23 and 24, the semicircular grooves 2a and 19a are made in the cylinder block 2 of the crankshaft bearing and the bearing cap 19. The grooves differ in depth according to the difference in their thickness. In this engine, the thicker bit 23 is attached in the semicircular groove 2a in the cylinder block 2, and the touching surface 23a prevents the rotation by touching the surface 19b of the groove 19a in the bearing cap 19. On the opposite side, the bit 24 is prevented from rotating by making the surface 24a touch the surface of 23a of the other bit 23.

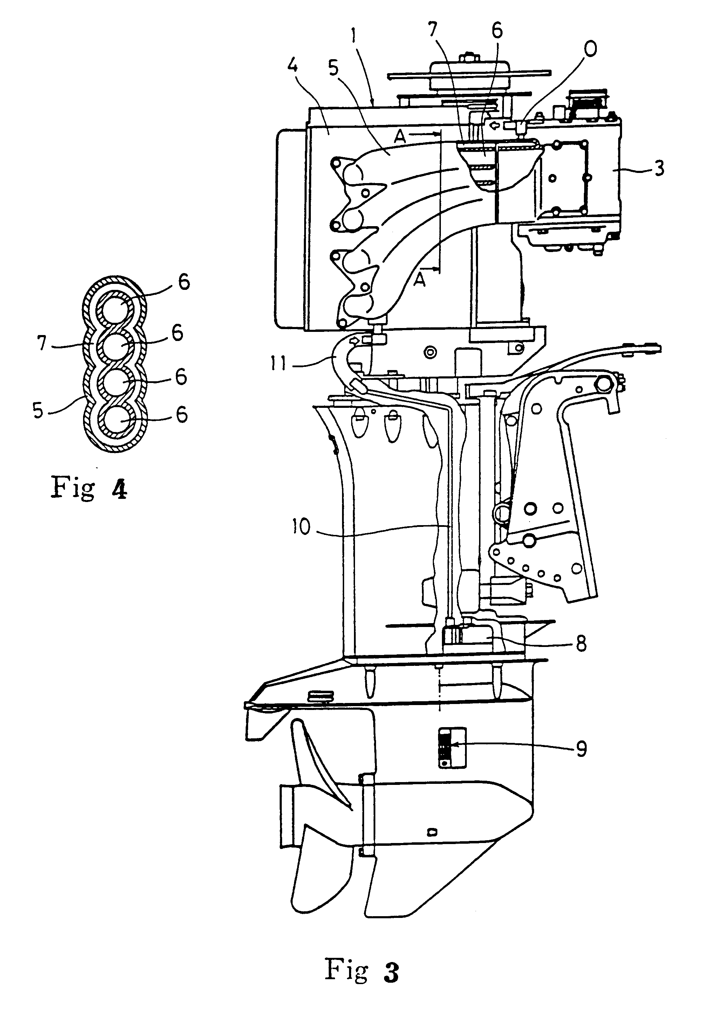

Fig. 3 is a cut-away side view showing a part of the outboard engine in the second embodiment.

Fig. 4 is a cross-sectional view on line A-A of Fig. 3. This outboard engine is a four-cylinder gasoline engine 1, and downstream of the carburettor (not illustrated) is fixed the supercharging blower 3. The supercharging blower 3 is connected to each port of the cylinders through the intake manifold, through whose passages 6 mixture is introduced into the engine 1. In this embodiment the cooling water passage has a section as shown in Fig. 4 and is located around the intake manifold 5. Water from outboard is introduced into the cooling water passage through the water pipe 10 and the connecting hose 11 from the cooling water intake hole.

The water is drawn in by the water pump 8 from outboard and introduced into the cooling water passage 7 and pumped outboard again through the outlet 0 after circulating and cooling mixture in each mixture-supplying passage 6 in the intake manifold. In this process, the mixture heated to about 110° C by the supercharging blower 3 is cooled by the cooling water passage 7. As a result, the process increases the power of the engine by about 5 % solving the problem of the supercharging blower itself in that the hot air or mixture heated to about 110° C with the compression by the supercharging blower attenuates the increase rate in power due to supercharging.

Furthermore, as the intake manifold itself is cooled by the cooling water passage 7, the cooling of the supercharging blower is effected at low cost without much space and without any cooler attached.

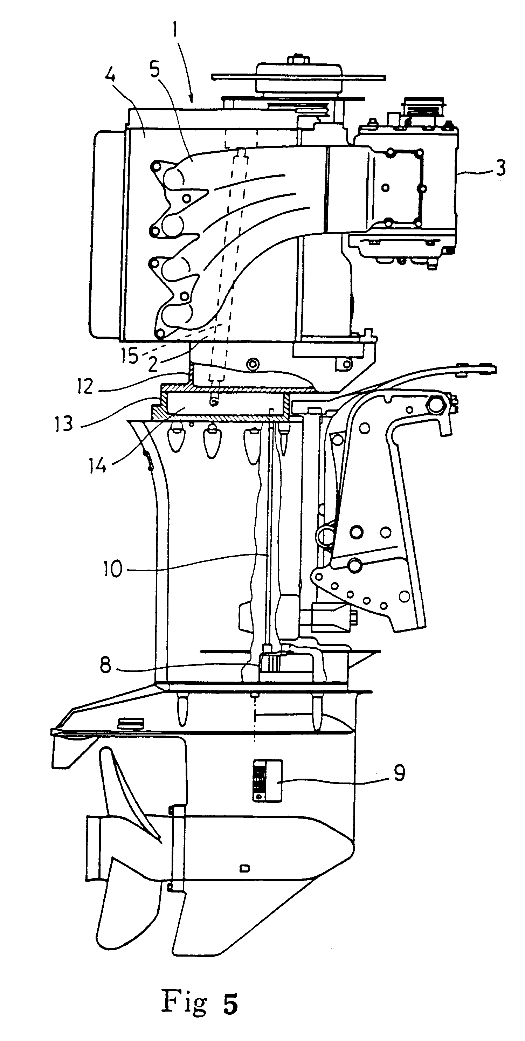

Fig. 5 is a cross-sectional side view of a second embodiment of outboard engine. In a four-stroke engine used for an outboard engine, an oil pan needs to be attached for pooling lubricating oil for the engine 1, differing from the case of a two-stroke engine in which lubricating oil is mixed with fuel oil.

However, there has been a problem in that the heated lubricating oil in the oil pan attached at the lower end of the cylinder block 2 causes the burning out of the engine 1.

Therefore, in the outboard engine of this embodiment, the engine base 13 is attached under the oil pan 12 in such a way that the cooling water circulates along the wall of the oil pan over the engine base 13 through the oil-cooling water passage 14. The base of the oil-cooling water passage is connected to the water pipe 10, the water pump 8 and the cooling water inlet 9. The upper part of the oil-cooling water passage 14 is connected to the water hose 15, which leads to outboard by way of the engine 1.

While the engine 1 is operating, water from outboard is drawn into the cooling water passage 14 attached at the engine base 13 through the water pipe 10 from the cooling water inlet 9 by the water pump 8 driven by the crankshaft (not illustrated). The water circulates along the base of the water pan 12, cooling the lubricating oil, and is discharged to the outboard through the water hose 15. Therefore, the engine 1 is cooled and prevented from burning out by lubricating oil that is always kept at a low temperature.

Needless to say, it is possible to make an engine equipped with the cooling water passage with a section as shown in Fig. 4, around the intake manifold 5 and with the cooling water passage 14, in the engine base 13, circulating along the base of the oil pan 12, as shown in Fig. 5, combining the above first embodiment with the second.

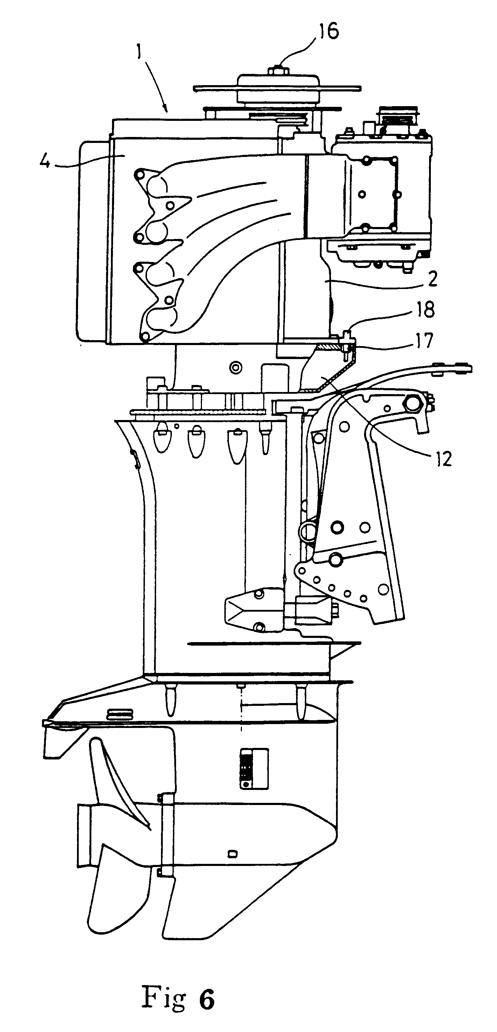

Fig. 6 is a cross-sectional side view for showing a part of an outboard engine in the third embodiment. In a four-stroke engine, the oil filler hole attached at the lower end of the cylinder block 2 has been located on the cover of the cylinder head 4. However, as the crankshaft of an engine is attached vertically, the cylinder head 4 is located at the rear of the engine. As a result, the lubricating oil filler hole is placed far on board, making it difficult to add lubricating oil, inspect the oil condition and keep the oil in proper level, increasing the possibility of the engine burning out.

Therefore, in this embodiment, the oil filler hole for the lubricating oil is located at the upper part of the oil pan 12 fixed at the lower end of the cylinder block 2 so that it may be located at the side of the boat's hull body against the crankshaft 16, and to this supplying hole the inspection bar 18 is attached with screws. Therefore, the supply of lubricating oil to the oil pan of the engine 1 can be accomplished on board, and the inspection of the oil condition can also be done easily while on board, making it possible to supply the proper amount of oil. Thus the engine 1 is prevented from burning out, with a proper amount of lubricating oil always provided.

Thus the invention provides a four-stroke engine in an outboard motor assembly comprising the engine, a propeller, a drive shaft connecting the engine and propeller and means by which the assembly can be supported on the stern of a boat to operate as an outboard motor, with a particularly robust thrust washer assembly. The motor preferably has pivoting means by which the assembly can pivot about an upright axis for steering a driven boat and a steering handle and throttle control normally provided thereon. There is a supercharging blower in the engine to assist with effective operation.

## Claims

1. An outboard engine comprising:
a four-cycle engine (1) having a crankshaft (16) extending substantially vertically while running; and
a thrust washer (23,24) mounted on bearing portions formed on a cylinder block (2) and a bearing cap (19) of the engine, respectively, for supporting the crankshaft, characterised in that said thrust washer is composed of a pair of semicircular plates (23 and 24) having different thicknesses from each other; in that said semicircular plates are received within semicircular grooves (2a,19a) which are formed on said bearing portions of the cylinder block and the bearing cap and have different depths from each other, in such a manner that the mating surface of the one said semicircular plate (23) having the larger thickness contacts the end surface of the one (2a) of said semicircular grooves having the shallower depth; and in that a supercharging blower (3) is connected to the combustion gas inlet system of the motor.

2. An outboard engine as set forth in claim 1, wherein the supercharger is located between an intake manifold and a carburettor of the engine.

3. An outboard engine as set forth in claim 1 or 2, wherein the four-stroke engine is equipped with mixture-cooling water passages circulating around the outer surface of the intake manifold located between the supercharger and valve ports of the cylinder heads, and a water pump for feeding water from outboard to the water passages.

4. An outboard engine as set forth in claim 1, 2 or 3, wherein the engine is equipped with an oil pan at the lower end of the cylinder block and oil cooling water passages, located along the oil pan, are provided for circulating water drawn in from the outboard by the or a water pump.

5. An outboard engine as set forth in claim 1, 2, 3 or 4, wherein the engine is equipped with an oil pan attached at the bottom of the cylinder block and has a lubricating oil filler hole at the top of the oil pan to be located close by the boat's hull against the crankshaft.

## Patentansprüche

1. Außenbordmotor mit:
einem Viertaktmotor (1) mit einer Kurbelwelle (16), die sich im wesentlichen senkrecht erstreckt, während sie in Gang ist, und
einer Sicherungsscheibe (23,24), die jeweils an in einem Zylinderblock (2) ausgebildeten Lagerabschnitten und einem Lagerdeckel (19) des Motors angebracht ist, um die Kurbelwelle zu stützen,
dadurch gekennzeichnet, daß sich die Sicherungsscheibe aus einem Paar von halbkreisförmigen Platten (23 und 24) zusammensetzt, die sich in der Dicke voneinander unterscheiden, daß die halbkreisförmigen Platten in halbkreisförmigen Nuten (2a, 19a) aufgenommen werden, die auf den Lagerabschnitten des Zylinderblocks und dem Lagerdeckel ausgebildet sind und sich in ihrer Tiefe voneinander unterscheiden, und zwar in der Weise, daß die passende Oberfläche der einen halbkreisförmigen Platte (23), die die größere Dicke aufweist, mit der Endfläche der einen (2a) der halbkreisförmigen Nuten in Berührung kommt, die die flachere Tiefe aufweist, und daß ein Aufladegebläse (3) mit dem Verbrennungsgaseinlaßsystem des Motors verbunden ist.

2. Außenbordmotor nach Anspruch 1, bei sich das Aufladegebläse zwischen der Ansaugleitung und einem Vergaser des Motors befindet.

3. Außenbordmotor nach Anspruch 1 oder 2, bei dem der Viertaktmotor mit Wasserkanälen zur Gemischkühlung, die um die äußere Oberfläche der Ansaugleitung herum zirkulieren, die sich zwischen dem Aufladegebläse und den Ventilöffnungen der Zylinderköpfe befindet, und mit einer Wasserpumpe ausgestattet ist, um das Wasser von Außenbord zu den Wasserkanälen zu speisen.

4. Außenbordmotor nach Anspruch 1, 2 oder 3, bei dem der Motor an dem unteren Ende des Zylinderblocks mit einer Ölwanne ausgestattet ist und Öl-Kühlwasserkanäle, die um die Ölwanne herum angeordnet sind, zum Zirkulieren von Wasser vorgesehen sind, das von der oder einer Wasserpumpe von Außenbord her eingezogen worden ist.

5. Außenbordmotor nach Anspruch 1, 2, 3 oder 4, bei dem der Motor an dem Boden des Zylinderblocks mit einer Ölwanne ausgestattet ist und ein Schmieröleinfüll-Loch oben an der Ölwanne aufweist, das nahe bei dem Bootsrumpf gegen die Kurbelwelle anzuordnen ist.

## Revendications

1. Moteur hors-bord comprenant:
un moteur quatre temps (1) comportant un vilebrequin (16) s'étendant sensiblement verticalement quand il tourne; et
une bague de butée (23, 24) montée sur des portions de palier formées sur un bloc-cylindre (2) et un chapeau de palier (19) du moteur, respectivement, pour supporter le vilebrequin, caractérisé en ce que ladite bague de butée est composé d'une paire de plaques semi-circulaires (23 et 24) présentant des épaisseurs différentes l'une de l'autre; en ce que lesdites plaques semi-circulaires sont reçues dans des gorges semi-circulaires (2a, 19a) qui sont formées sur lesdites portions de palier du bloc-cylindre et du chapeau de palier et qui présentent des profondeurs différentes l'une de l'autre, de manière que la surface correspondante de l'une (23) desdites plaques semicirculaires qui est d'épaisseur plus importante vienne en contact avec la surface d'extrémité de celle (2a) desdites gorges semi-circulaires dont la profondeur est la plus faible; et en ce qu'une soufflante de surcompression (3) est reliée au système d'admission de gaz de combustion du moteur.

2. Moteur hors-bord selon la revendication 1, dans lequel le surcompresseur est disposé entre un collecteur d'admission et un carburateur du moteur.

3. Moteur hors-bord selon la revendication 1 ou 2, dans lequel le moteur quatre temps est équipé de passages d'eau de refroidissement de mélange circulant autour de la surface extérieure du collecteur d'admission situé entre le surcompresseur et les orifices de soupape des têtes de cylindre, et une pompe à eau pour envoyer l'eau de l'extérieur dans les passages d'eau.

4. Moteur hors-bord selon la revendication 1, 2 ou 3, dans lequel le moteur est équipé d'une carter d'huile à l'extrémité inférieure du bloc-cylindre et des passages d'eau de refroidissement d'huile, disposés le long du carter d'huile, sont prévus pour faire circuler l'eau aspirée de l'extérieur par la ou par une pompe à eau.

5. Moteur hors-bord selon la revendication 1, 2, 3 ou 4, dans lequel le moteur est équipé d'un carter d'huile fixé au fond du bloc-cylindre et comprend un trou de remplissage d'huile de lubrification à la partie supérieure du carter d'huile qui est situé près de la coque du bateau et contre le vilebrequin.
